# FASCICULE DE BREVET EUROPEEN

(11) **EP 2 951 092 B1**
(45) Date de publication et mention de la délivrance du brevet: **13.12.2017**
(21) Numéro de dépôt: 14705838.2
(22) Date de dépôt: 23.01.2014
(51) Int. Cl.: B64D 33/02, B64D 41/00, F01D 25/10, F02C 7/08

(54) **AÉRONEF COMPORTANT UNE ARCHITECTURE D'ALIMENTATION EN AIR D'UN GROUPE AUXILIAIRE DE PUISSANCE**
FLUGZEUG MIT STRUKTUR ZUR ZUFUHR VON LUFT ZU EINER HILFSENERGIEVERSORGUNGSEINRICHTUNG
AIRCRAFT WITH A STRUCTURE FOR SUPPLYING AIR TO AN AUXILIARY POWER UNIT

(30) Priorité: 29.01.2013 FR 1350726
(43) Date de publication de la demande: 09.12.2015
(73) Titulaire: Safran Power Units, 31200 Toulouse (FR)
(72) Inventeur: RIDEAU, Jean-François, 31170 Tournefeuille (FR); SILET, Fabien, 31140 Pechbonnieu (FR)
(74) Mandataire: Regimbeau
(86) Numéro de dépôt international: PCT/FR2014/050124
(87) Numéro de publication internationale: WO 2014/118455

(56) Documents cités:
- EP-A2- 1 767 455
- EP-A2- 1 843 022
- EP-A2- 1 902 954
- GB-A- 1 316 275
- US-A- 5 442 905
- US-A1- 2009 088 063
- US-B1- 6 283 410

## Description

### DOMAINE DE L'INVENTION

Le domaine de l'invention est celui des groupes auxiliaires de puissance installés dans les aéronefs, et plus spécifiquement celui des architectures d'alimentation en air desdits groupes.

### ETAT DE LA TECHNIQUE

Un aéronef comporte plusieurs sources de génération de puissance, parmi lesquelles :
- les moteurs principaux, qui assurent la propulsion de l'aéronef,
- un moteur auxiliaire appelé groupe auxiliaire de puissance ou APU, acronyme anglais de « Auxiliary Power Unit », dont la fonction est de fournir de l'énergie non propulsive (par exemple alimentation électrique, pressions pneumatique et hydraulique, climatisation, etc.) à l'aéronef au sol et en vol, lorsque les moteurs principaux ne sont pas en mesure de le faire, ou pour économiser la consommation de carburant de l'aéronef, et
- une source de puissance de secours, dont la fonction est de fournir l'énergie électrique de secours à des éléments critiques de l'aéronef (contrôles de vol et instruments de vol critiques) en cas de perte des autres sources de génération de puissance.

Les aéronefs peuvent obtenir une classification baptisée ETOPS, acronyme anglais de « extended twin-engine operations », les autorisant à emprunter une route aérienne comportant des secteurs situés à plus d'une heure d'un aéroport de secours. Pour ce faire, un aéronef doit, entre autres, être équipé d'un groupe auxiliaire de puissance APU présentant une capacité de démarrage à froid à très haute altitude, soit entre 11900 mètres (39000 pieds) et 12500 mètres (41000 pieds) suivant les porteurs.

Il serait souhaitable d'augmenter ce plafond pour certains aéronefs volant à des altitudes supérieures, jusqu'à 15500 mètres (51000 pieds), afin de limiter l'impact d'une défaillance des moteurs principaux au cours du vol.

Un groupe auxiliaire de puissance est du type comprenant une turbomachine comprenant une chambre de combustion inversée, associée à un système d'injection d'air et de carburant.

Or, il est difficile d'allumer une telle turbomachine en altitude car l'air en altitude est pauvre en oxygène, et le carburant est froid, et donc plus difficile à allumer. Il faut alors maintenir une fenêtre d'allumage, c'est-à-dire l'ensemble des paramètres de richesse en oxygène, pression, température, et débit de l'air qui doivent être maîtrisés pour autoriser l'allumage du carburant, pendant suffisamment longtemps pour que la turbomachine du groupe auxiliaire de puissance diverge, c'est-à-dire délivre suffisamment d'énergie pour entraîner le groupe.

Plus l'altitude de l'aéronef est élevée, et plus la fenêtre d'allumage du groupe est étroite et difficile à détecter et à maintenir.

Le document EP 1 843 022 décrit une architecture d'alimentation en air d'un groupe auxiliaire de puissance dont l'alimentation d'air est mixte entre une alimentation provenant d'une cabine pressurisée de l'aéronef et une alimentation provenant de l'atmosphère.

Le document EP 1 767 455 décrit une architecture d'alimentation en air d'un groupe auxiliaire de puissance comprenant un conduit d'alimentation en air dans lequel se trouve une vanne (138) d'admission d'air extérieur.

### RESUME DE L'INVENTION

L'invention a pour but de pallier au moins l'un des inconvénients mentionnés ci-avant, en proposant une architecture d'alimentation en air d'un groupe auxiliaire de puissance rendant plus facile l'allumage en altitude du groupe auxiliaire de puissance.

A cet égard, l'invention a pour objet un aéronef selon la revendication 1. Avantageusement, mais facultativement, l'aéronef selon l'invention peut en outre présenter au moins l'une des caractéristiques suivantes :
- la vanne de répartition est adaptée pour prélever du débit d'air circulant dans le circuit d'évacuation une proportion variable continument entre une première proportion où la totalité du débit d'air est prélevée, et une seconde proportion où une proportion nulle est prélevée.
- l'unité de contrôle est adaptée pour piloter l'ouverture de la vanne d'admission d'air extérieur et l'ouverture de la vanne de répartition en fonction d'une phase de fonctionnement du groupe auxiliaire de puissance.
- l'unité de contrôle est adaptée pour piloter l'ouverture de la vanne d'admission d'air extérieur et l'ouverture de la vanne de répartition en fonction d'une vitesse de rotation d'un arbre rotatif du groupe auxiliaire de puissance.

L'invention a enfin pour objet un procédé d'alimentation en air d'un groupe auxiliaire de puissance dans un aéronef selon la revendication 5. Avantageusement, mais facultativement, le procédé selon l'invention peut en outre comprendre au moins l'une des caractéristiques suivantes :
- les proportions d'air provenant de l'extérieur et d'air récupéré de la cabine pressurisée sont pilotées en fonction d'une vitesse de rotation d'un arbre rotatif du groupe auxiliaire de puissance.
- Au cours du procédé :
   - au cours d'une phase de démarrage du groupe auxiliaire de puissance, l'alimentation en air dudit groupe provient uniquement de l'air récupéré de la cabine pressurisée, et
   - au cours d'une phase transitoire entre la phase de démarrage et une phase de fonctionnement stabilisé, l'alimentation en air du groupe auxiliaire de puissance comprend un débit d'air croissant provenant de l'extérieur et un débit d'air croissant provenant de la cabine pressurisée.
- au cours d'une phase de fonctionnement stabilisé, l'alimentation en air du groupe auxiliaire de puissance provient uniquement de la cabine pressurisée, ou provient en partie de la cabine et en partie de l'air extérieur.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1 représente schématiquement un aéronef équipé d'une architecture d'alimentation en air d'un groupe auxiliaire de puissance selon un mode de réalisation de l'invention.
- La figure 2 représente les principales étapes du procédé d'alimentation en air d'un groupe auxiliaire de puissance selon un mode de réalisation de l'invention.

### DESCRIPTION DETAILLEE D'AU MOINS UN MODE DE REALISATION DE L'INVENTION

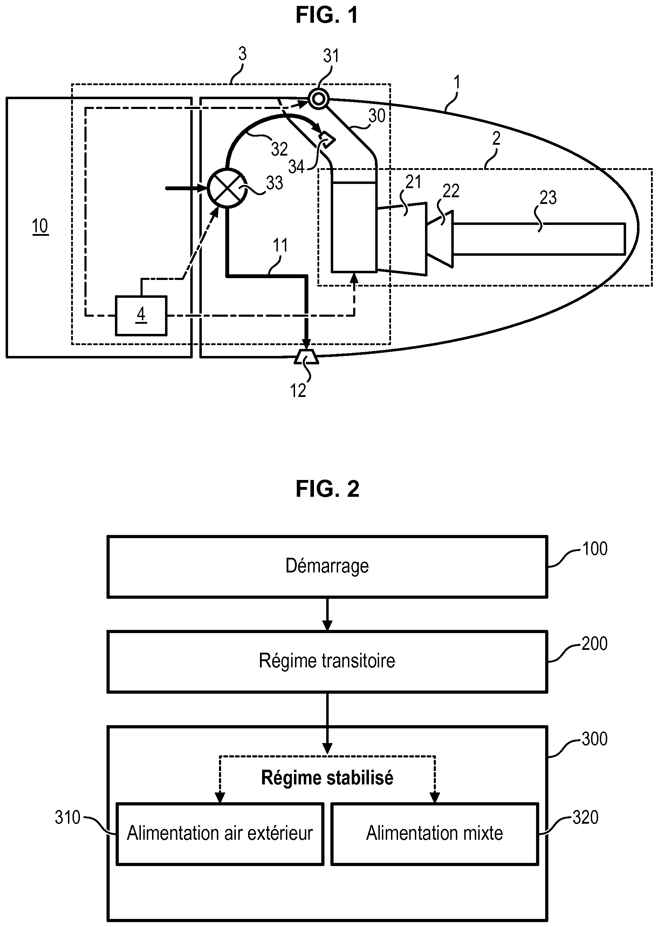

En référence à la figure 1, on a représenté un aéronef 1 comportant une cabine pressurisée 10, par exemple une cabine de passagers. Par cabine pressurisée, on entend une cabine dont l'air qu'elle contient est pressurisé par rapport à l'extérieur, notamment quand l'aéronef est en vol.

L'aéronef comporte en outre un circuit d'évacuation 11 vers l'extérieur de l'aéronef de l'air contenu dans la cabine, comportant notamment une valve 12 d'évacuation de l'air vers l'extérieur, pour permettre le renouvellement de l'air contenu dans la cabine.

Un certain débit d'air, dépendant de la taille de la cabine, s'écoule en permanence dans ce circuit pour être évacué, afin de permettre le renouvellement de l'air contenu dans la cabine.

L'aéronef comporte également un groupe auxiliaire de puissance 2, qui comprend une chambre de combustion de carburant, une turbine d'entraînement d'un compresseur d'air, via un arbre rotatif de transmission, représentés schématiquement sur la figure sous la référence 21, une tuyère 22 d'éjection et un conduit d'échappement des gaz 23.

Le groupe auxiliaire de puissance comporte également un circuit d'alimentation en carburant (non représenté) et une architecture d'alimentation en air 3.

Cette architecture comporte un conduit 30 d'alimentation en air du groupe auxiliaire de puissance, en entrée de celui-ci, et une vanne 31 d'admission d'air extérieur à l'aéronef en entrée du conduit 30, pour alimenter le groupe auxiliaire de puissance en air.

L'architecture comporte en outre une unité de commande 4 configurée pour commander l'ouverture de la vanne 31 afin de réguler le débit d'air extérieur alimentant le groupe auxiliaire de puissance.

Enfin, l'architecture 3 d'alimentation en air du groupe auxiliaire de puissance comprend également un circuit d'injection d'air 32 récupéré de la cabine pressurisée dans le conduit 30 d'alimentation du groupe auxiliaire de puissance. Ce circuit comporte une vanne de répartition 33 permettant son raccordement au circuit d'évacuation 11 de l'air de la cabine pressurisée, et une trompe 34 d'injection de l'air récupéré de la cabine pressurisée dans le conduit 30 d'alimentation.

Avantageusement, l'unité de commande 4 est également configurée pour contrôler l'ouverture de la vanne de répartition 33, selon une pluralité de configurations pour faire varier la proportion d'air prélevée du débit d'air circulant dans le circuit d'évacuation, depuis une configuration dite fermée de la vanne, où un débit d'air nul est prélevé du circuit d'évacuation, à une deuxième configuration dite ouverte où la totalité du débit d'air dans le circuit d'évacuation est prélevée pour alimenter le groupe auxiliaire de puissance.

Avantageusement, la proportion d'air prélevée du circuit d'évacuation est variable continument entre les configurations ouverte et fermée de la vanne de répartition 33.

De la sorte, le groupe auxiliaire de puissance peut bénéficier à la fois d'une alimentation en air extérieur, qui, quand l'aéronef est en vol, est pauvre en oxygène et froid, mais peut présenter un débit important, et d'une alimentation en air provenant de la cabine, qui est plus riche en oxygène et à une température plus élevé, bien qu'à un débit plus faible.

L'unité de contrôle pilote 4 avantageusement l'ouverture de la vanne 31 d'admission d'air extérieur et de la vanne 33 de répartition en fonction d'une phase de fonctionnement du groupe auxiliaire de puissance APU 2. En effet, lors de son démarrage, le groupe APU 2 ne requiert pas un débit important d'air, et en outre ce débit doit être maitrisé afin de garantir une fenêtre de démarrage suffisamment grande. Au contraire, lorsque le groupe APU est démarré et en fonctionnement, le débit d'air nécessaire à son fonctionnement est plus important.

L'unité de contrôle est donc configurée pour mettre en oeuvre le procédé d'alimentation en air du groupe auxiliaire de puissance, décrit ci-après en référence à la figure 2.

Au démarrage 100, pour allumer la chambre de combustion du groupe auxiliaire de puissance, l'unité de contrôle 4 pilote alors la vanne 31 pour qu'elle reste fermée et ouvre la vanne 33 pour que toute l'alimentation en air du groupe APU provienne de la cabine. La proportion d'air prélevée du circuit d'évacuation 11 est variable en fonction du dimensionnement de l'aéronef et de ses différents composants. Dans des circonstances où le démarrage du groupe APU a lieu alors que l'aéronef est en vol en altitude, l'air provenant de la cabine facilite ce démarrage car il est plus riche en oxygène et présente une température plus élevée que l'air extérieur (par exemple de l'ordre de 20°C tandis que l'air extérieur présente une température négative).

En régime transitoire 200, une fois que la chambre de combustion du groupe auxiliaire de puissance 2 est allumée et commence à diverger, l'unité de contrôle 4 peut alors progressivement ouvrir la vanne 31 et la vanne 33 pour apporter un débit d'air plus important, provenant à la fois de la cabine et de l'atmosphère extérieure.

Enfin, en régime stabilisé 300, l'unité de contrôle 4 peut, selon un premier mode de mise en oeuvre 310, fermer progressivement la vanne 33 de répartition pour que l'air alimentant le groupe auxiliaire de puissance provienne exclusivement de l'extérieur, auquel cas une proportion nulle d'air est prélevée du circuit d'évacuation 11.

En variante 320, l'unité de contrôle peut maintenir les deux vannes 31 et 33 ouvertes de sorte que l'air alimentant le groupe auxiliaire de puissance comprenne à la fois de l'air provenant de l'extérieur et de l'air récupéré de la cabine 10.

Très avantageusement, pour une précision accrue du pilotage des vannes 31 et 33, leur pilotage par l'unité de commande est asservi à la vitesse de rotation de l'arbre rotatif du groupe auxiliaire de puissance.

L'architecture proposée facilite donc l'allumage du groupe auxiliaire de puissance d'un aéronef lorsque celui-ci est en vol, et particulièrement lorsqu'il se trouve en altitude dans une atmosphère pauvre en oxygène, car l'alimentation en air au démarrage présente un débit faible et une richesse en oxygène supérieure à celle de l'air dans l'atmosphère. L'allumage est facilité.

## Revendications

1. Aéronef (1) comportant une cabine pressurisée (10), un circuit d'évacuation d'air (11) provenant de la cabine vers l'extérieur de l'aéronef, un groupe auxiliaire de puissance (2) du type comprenant une chambre de combustion de carburant, et une architecture (3) d'alimentation en air du groupe auxiliaire de puissance, l'architecture comprenant:
- un conduit (30) d'alimentation en air du groupe auxiliaire de puissance (2) et un circuit d'injection d'air (32) provenant de la cabine pressurisée dans le conduit d'alimentation du groupe auxiliaire de puissance,
l'aéronef étant **caractérisé en ce que** l'architecture comprend
- une unité de contrôle (4) du débit d'air fourni au groupe auxiliaire de puissance (2),
- une vanne (31) d'admission d'air extérieur à l'aéronef, disposée en entrée du conduit d'alimentation (30), l'ouverture de ladite vanne étant pilotée par l'unité de contrôle (4), et
**en ce que** le circuit d'injection d'air (32) provenant de la de la cabine pressurisée comprend une vanne de répartition (33) dont l'ouverture est pilotée par l'unité de contrôle (4) pour prélever une proportion d'un débit d'air circulant dans le circuit d'évacuation (11), le circuit d'injection d'air (32) étant raccordé au circuit d'évacuation (11) d'air vers l'extérieur de l'aéronef par la vanne de répartition (33), et **en ce que** le circuit d'injection d'air (32) comprend en outre en sortie une trompe d'injection (34) de ladite proportion dans le conduit d'alimentation (30) du groupe auxiliaire de puissance (2).

2. Aéronef (1) selon la revendication 1, dans lequel la vanne de répartition (33) est adaptée pour prélever du débit d'air circulant dans le circuit d'évacuation (11) une proportion variable continument entre une première proportion où la totalité du débit d'air est prélevée, et une seconde proportion où une proportion nulle est prélevée.

3. Aéronef (1) selon l'une des revendications 1 ou 2, dans lequel l'unité de contrôle (4) est adaptée pour piloter l'ouverture de la vanne d'admission d'air extérieur (12) et l'ouverture de la vanne de répartition (33) en fonction d'une phase de fonctionnement du groupe auxiliaire de puissance (2).

4. Aéronef (1) selon la revendication 3, dans lequel l'unité de contrôle (4) est adaptée pour piloter l'ouverture de la vanne d'admission d'air extérieur (31) et l'ouverture de la vanne de répartition (33) en fonction d'une vitesse de rotation d'un arbre rotatif du groupe auxiliaire de puissance (2).

5. Procédé d'alimentation en air d'un groupe auxiliaire de puissance (2) du type comprenant une chambre de combustion de carburant, dans un aéronef (1) selon la revendication 1,
le procédé étant **caractérisé en ce que** l'alimentation en air du groupe auxiliaire de puissance (2) comporte une proportion d'air provenant de l'extérieur de l'aéronef et une proportion d'air récupéré de la cabine pressurisée (10),
et **en ce que** les proportions d'air provenant de l'extérieur et d'air récupéré de la cabine pressurisée sont pilotées en fonction d'une phase de fonctionnement du groupe auxiliaire de puissance (2).

6. Procédé selon la revendication précédente, dans lequel les proportions d'air provenant de l'extérieur et d'air récupéré de la cabine pressurisée sont pilotées en fonction d'une vitesse de rotation d'un arbre rotatif du groupe auxiliaire de puissance.

7. Procédé selon l'une des revendications 5 ou 6, dans lequel,
- au cours d'une phase de démarrage (100) du groupe auxiliaire de puissance (2), l'alimentation en air dudit groupe provient uniquement de l'air récupéré de la cabine pressurisée (10), et
- au cours d'une phase transitoire (200) entre la phase de démarrage et une phase de fonctionnement stabilisé (300), l'alimentation en air du groupe auxiliaire de puissance (2) comprend un débit d'air croissant provenant de l'extérieur et un débit d'air croissant provenant de la cabine pressurisée (10).

8. Procédé selon la revendication précédente, dans lequel, au cours d'une phase de fonctionnement stabilisé (300), l'alimentation en air du groupe auxiliaire de puissance (2) provient uniquement de la cabine pressurisée, ou provient en partie de la cabine et en partie de l'air extérieur.

## Patentansprüche

1. Luftfahrzeug (1), aufweisend eine Druckkabine (10), einen Luftableitungskreis (11) von der Kabine nach außerhalb des Luftfahrzeugs, eine Hilfsenergieversorgungseinrichtung (2) des Typs, umfassend eine Kraftstoffverbrennungskammer und eine Luftversorgungsarchitektur (3) der Hilfsenergieversorgungseinrichtung, wobei die Architektur umfasst:
eine Luftversorgungsleitung (30) der Hilfsenergieversorgungseinrichtung (2) und
einen Lufteinleitungskreis (32) von der Druckkabine in die Hilfsenergieversorgungseinrichtung,
wobei das Luftfahrzeug **dadurch gekennzeichnet ist, dass** die Architektur umfasst:
- eine Steuereinheit (4) des der Hilfsenergieversorgungseinrichtung (2) bereitgestellten Luftdurchsatzes,
- ein Außenluft-Einlassventil (31) in das Luftfahrzeug, angeordnet am Eingang der Versorgungsleitung (30), wobei das Öffnen des Ventils von der Steuereinheit (4) gesteuert wird, und dass der Lufteinleitungskreis (32) von der Druckkabine ein Aufteilungsventil (33) umfasst, dessen Öffnen von der Steuereinheit (4) gesteuert wird, um einen Anteil eines Luftdurchsatzes zu entnehmen, der im Ableitungskreis (11) zirkuliert, wobei der Lufteinleitungskreis (32) an den Luftableitungskreis (11) nach außerhalb des Luftfahrzeugs mittels des Aufteilungsventils (33) angeschlossen ist, und dass der Lufteinleitungskreis (32) ferner am Ausgang ein Einleitungsgebläse (34) des Anteils in die Versorgungsleitung (30) der Hilfsenergieversorgungseinrichtung (2) umfasst.

2. Luftfahrzeug (1) nach Anspruch 1, wobei das Aufteilungsventil (33) ausgebildet ist, um aus dem im Ableitungskreis (11) zirkulierenden Luftdurchsatz einen kontinuierlich zwischen einem ersten Anteil, bei dem die Gesamtheit des Luftdurchsatzes entnommen wird, und einem zweiten Anteil, bei dem ein Anteil Null entnommen wird, variablen Anteil zu entnehmen.

3. Luftfahrzeug (1) nach einem der Ansprüche 1 oder 2, wobei die Steuereinheit (4) ausgebildet ist, um das Öffnen des Außenluft-Einlassventils (12) und das Öffnen des Aufteilungsventils (33) in Abhängigkeit von einer Betriebsphase der Hilfsenergieversorgungseinrichtung (2) zu steuern.

4. Luftfahrzeug (1) nach Anspruch 3, wobei die Steuereinheit (4) ausgebildet ist, um das Öffnen des Außenluft-Einlassventils (31) und das Öffnen des Aufteilungsventils (34) in Abhängigkeit von einer Rotationsgeschwindigkeit einer rotierenden Welle der Hilfsenergieversorgungseinrichtung (2) zu steuern.

5. Verfahren für die Versorgung mit Luft einer Hilfsenergieversorgungseinrichtung (2) des Typs, umfassend eine Kraftstoffverbrennungskammer, in einem Luftfahrzeug (1) nach Anspruch 1,
wobei das Verfahren **dadurch gekennzeichnet ist, dass** die Versorgung mit Luft der Hilfsenergieversorgungseinrichtung (2) einen Luftanteil aufweist, der von außerhalb des Luftfahrzeugs kommt, und einen Luftanteil, der aus der Druckkabine (10) zurückgewonnen wird,
und dass der Anteil der Luft, der von außen kommt, und von Luft, der aus der Druckkabine zurückgewonnen wird, in Abhängigkeit von einer Betriebsphase der Hilfsenergieversorgungseinrichtung (2) gesteuert wird.

6. Verfahren nach vorangehendem Anspruch, wobei der Anteil der Luft, der von außen kommt, und von Luft, der aus der Druckkabine zurückgewonnen wird, in Abhängigkeit von einer Rotationsgeschwindigkeit einer rotierenden Welle der Hilfsenergieversorgungseinrichtung gesteuert wird.

7. Verfahren nach einem der Ansprüche 5 oder 6, wobei,
- während einer Startphase (100) der Hilfsenergieversorgungseinrichtung (2) die Versorgung mit Luft der Einrichtung ausschließlich von der aus der Druckkabine (10) zurückgewonnenen Luft kommt, und
- während einer Übergangsphase (200) zwischen der Startphase und einer stabilisierten Betriebsphase (300) die Versorgung mit Luft der Hilfsenergieversorgungseinrichtung (2) einen steigenden Luftdurchsatz umfasst, der von außen kommt, und einen steigenden Luftdurchsatz, der von der Druckkabine (10) kommt.

8. Verfahren nach vorangehendem Anspruch, wobei während einer stabilisierten Funktionsphase (300) die Versorgung mit Luft der Hilfsenergieversorgungseinrichtung (2) ausschließlich von der Druckkabine kommt, oder teilweise von der Kabine und teilweise von der Außenluft kommt.

## Claims

1. An aircraft (1) comprising a pressurized cabin (10), a circuit (11) for exhausting air from the cabin to the outside of the aircraft, an auxiliary power unit (2) of the type including a combustion chamber for fuel, and an architecture (3) for supplying air to the auxiliary power unit, the architecture including:
a duct (30) for supplying air to the auxiliary power unit (2), and
a circuit (32) for injecting air coming from the pressurized cabin into the supply duct of the auxiliary power unit,
the aircraft being **characterized in that** the architecture includes
- a unit (4) for controlling the flow of air supplied to the auxiliary power unit (2),
- a valve (31) for admitting air from outside the aircraft, positioned at the inlet of the supply duct (30), the opening of said valve being controlled by the control unit (4), and **in that** the circuit (32) for injecting air coming from the pressurized cabin includes a distribution valve (33) the opening whereof is controlled by the control unit (4) to draw a proportion of a flow of air circulating in the exhaust circuit (11), wherein the circuit (32) for injecting air is connected to the circuit (11) for exhausting air toward the outside of the aircraft through the distribution valve (33), and **in that** the circuit (32) for injecting air further includes at its exit a nozzle (34) for injecting said proportion into the supply duct (30) of the auxiliary power unit (2).

2. The aircraft (1) according to claim 1, wherein the distribution valve (33) is adapted to draw from the flow of air circulating in the exhaust circuit (11) a continuously variable proportion between a first proportion in which the entirety of the flow of air is drawn, and a second proportion in which a zero proportion is drawn.

3. The aircraft (1) according to one of claims 1 or 2, wherein the control unit (4) is adapted to control the opening of the outside air admission valve (12) and the opening of the distribution valve (33) depending on a phase of operation of the auxiliary power unit (2).

4. The aircraft (1) according to claim 3, wherein the control unit (4) is adapted to control the opening of the outside air admission valve (31) and the opening of the distribution valve (34) according to a rotation speed of a rotating shaft of the auxiliary power unit (2).

5. A method for supplying air to an auxiliary power unit (2) of the type having a combustion chamber for fuel, in an aircraft (1) according to claim 1,
the method being **characterized in that** supplying air to the auxiliary power unit (2) comprises a proportion of air coming from the outside of the aircraft and a proportion of air recovered from the pressurized cabin (10),
and **in that** the proportions of air coming from the outside and air recovered from the pressurized cabin are controlled according to a phase of operation of the auxiliary power unit (2).

6. The method according to the preceding claim, wherein the proportions of air coming from the outside and air recovered from the pressurized cabin are controlled according to a rotation speed of a rotating shaft of the auxiliary power unit.

7. The method according to one of claims 5 or 6, wherein,
- during a starting phase (100) of the auxiliary power unit (2), the supply of air to said unit comes exclusively from the air recovered from the pressurized cabin (10), and
- during a transitional phase (200) between the starting phase and a stabilized operation phase (300), the supply of air to the auxiliary power unit (2) includes an increasing flow of air coming from the outside and an increasing flow of air coming from the pressurized cabin (10).

8. The method according to the preceding claim wherein, during a stabilized operation phase (300), the supply of air to the auxiliary power unit (2) comes solely from the pressurized cabin, or comes partly from the cabin and partly from outside air.
